# EUROPÄISCHE PATENTANMELDUNG

(11) **EP 2 184 678 A1**
(43) Veröffentlichungstag der Anmeldung: **12.05.2010**
(21) Anmeldenummer: 08019517.5
(22) Anmeldetag: 07.11.2008
(51) Int. Cl.: G06F 9/44

(54) **Automatisierte Generierung einer Computer-Applikation**

(71) Anmelder: Deutsche Telekom AG, 53113 Bonn (DE)
(72) Erfinder: Oberle, Frank, 10623 Berlin (DE); Schostag, Thomas, 15834 Rangsdorf (DE); Kliche, Ingmar, 10407 Berlin (DE); Ziem, Thomas, 16321 Bernau (DE); Weiss, Benjamin, 10405 Berlin (DE)
(74) Vertreter: Vossius & Partner

(57) **Zusammenfassung**

Ein System zur automatisierten Generierung einer Computer-Applikation umfasst eine computerbetriebene Modellierungseinheit und einen computerbetriebenen Projektgenerator, wobei die Modellierungseinheit Erfassungsmittel zur grafischen Erfassung einer Komponente mittels einer vordefinierten Notation und Repräsentationsmittel zur Umwandlung der Komponente in eine Repräsentation aufweist und wobei der Projektgenerator Kompiliermittel zur Transformation der Repräsentation in die Computer-Applikation aufweist. Die Notation ist dabei eine universelle Notation, so dass durch die Erfassungsmittel der Modellierungseinheit sowohl eine Interaktionskomponente als auch eine Logikkomponente mittels der Notation in einem integrierten Modell grafisch erfassbar sind. Mit dem erfindungsgemäßen System kann die Computer-Applikation mittels der Modellierungseinheit unabhängig von der Zielplattform, von den Ein- und Ausgabemodalitäten und vom Anwendungskontext grafisch modelliert werden.

## Beschreibung

### Technisches Gebiet

Die Erfindung betrifft ein System gemäß dem Oberbegriff des unabhängigen Patentanspruchs 1 sowie ein Computerprogramm zum Betreiben eines solchen Systems.

Solche Systeme, die eine computerbetriebene Modellierungseinheit und einen computerbetriebenen Projektgenerator umfassen, wobei die Modellierungseinheit Erfassungsmittel zur grafischen Erfassung einer Komponente mittels einer vordefinierten Notation und Repräsentationsmittel zur Umwandlung der Komponente in eine Repräsentation aufweist und wobei der Projektgenerator Kompiliermittel zur Transformation der Repräsentation in die Computer-Applikation aufweist, können zur automatisierten Generierung einer Computer-Applikation eingesetzt werden.

### Stand der Technik

Bei der Entwicklung von Computer-Applikationen werden neben der klassischen textbasierten Programmierung heute häufig Systeme eingesetzt, die die Erstellung gewisser Komponenten der Computer-Applikationen so unterstützen, dass ein Benutzer des Systems geringere oder sogar keine detaillierte Kenntnis einer Programmiersprache haben muss. Dabei stellt sowohl die Vielfalt an Endgeräten, insbesondere im mobilen Bereich, als auch die Vielfalt an Ein- und Ausgabemodalitäten moderner Computer-Applikationen die Entwicklung von Computer-Applikationen mit oder ohne Hilfe solcher Systeme vor neue Probleme. In modernen Computer-Applikationen können Eingaben häufig nicht nur per Maus, Tastatur oder Stift gemacht werden, sondern auch per Spracheingabe oder per Bewegungssteuerung, wenn beispielsweise Bewegungssensoren in einem Endgerät, auf dem die Computer-Applikation ausgeführt wird, vorhanden sind. Außerdem können weitere Sensoren wie beispielsweise Einrichtungen zur Standortbestimmung (GPS) oder Kameras die Eingabemöglichkeiten von Endgeräten zur Bedienung von Computer-Applikationen erweitern. Auch auf der Ausgabeseite setzen sich neben der herkömmlichen grafischen und akustischen Informationsausgabe mehr und mehr auch andere Technologien durch wie beispielsweise haptische Ausgaben. Diese Vielfalt an Ein- und Ausgabemodalitäten und die damit verbundene Komplexität multimodaler Interaktion in Computer-Applikationen aber auch die Vielfalt an möglichen Endgeräten beziehungsweise Zielplattformen stellen die Entwickler von Computer-Applikationen vor große Herausforderungen.

Aspekte, die die Komplexität der Entwicklung moderner Computer-Applikationen erhöhen können, sind dabei also beispielsweise die Integration und Synchronisation verschiedener unterschiedlicher Ein- und Ausgabemodalitäten, die Integration unterschiedlicher Zielplattformen auf denen eine Computer-Applikation ausgeführt werden soll oder die Berücksichtigung unterschiedlicher Anwendungskontexte in Form unterschiedlicher Betriebszustände. Ein Beispiel für die Synchronisation unterschiedlicher Ein- und Ausgabemodalitäten in einer Computer-Applikation kann sein, dass eine Eingabe, die per Sprache getätigt wurde, möglichst zeitnah auch auf einem Display erscheinen muss. Ein Beispiel für die Integration unterschiedlicher Ein- und Ausgabemodalitäten in einer Computer-Applikation kann sein, dass mehr als eine Eingabemodalität genutzt werden kann, z.B. ein Objekt kann per Stift ausgewählt werden und ein zugehörige Aktion kann gleichzeitig bzw. innerhalb eines Zeitfensters per Sprache definiert werden. Die Sprachäußerung umfasst dabei die Aktion und einen Verweis auf ein unbestimmtes Objekt, das aus der Stifteingabe zu integrieren ist. Ein Beispiel für die Berücksichtigung unterschiedlicher Anwendungskontexte einer Computer-Applikation kann sein, dass je nachdem, in welchem Kontext sich ein Benutzer der Computer-Applikation befindet (z.B. zu hause vor dem Laptop, unterwegs mit einem mobilen Endgerät oder im Auto mit Freisprecheinrichtung), stehen verschiedene Endgeräte mit unterschiedlichen Ein- und Ausgabemodalitäten zur Verfügung. Die Interaktion zwischen Mensch und Maschine muss sich dabei danach richten, welches Endgerät und welche Ein- und Ausgabemodalitäten für die Interaktion aktuell zur Verfügung stehen. Damit eine Computer-Applikation in unterschiedlichen Anwendungskontexten lauffähig ist, muss deswegen für ein- und dieselbe Aufgabe (z.B. Authentifizierung) mehr als eine Implementierung in der Computer-Applikation vorgesehen sein.

Die oben beschriebene Komplexität der Entwicklung entsprechender Computer-Applikationen hat verhindert, dass heutige Computer-Applikationen standardmäßig die technischen Möglichkeiten auf Seiten der Endgeräte angemessen ausnutzen. Systeme zur Erstellung von Computer-Applikationen der oben genannten Art, die im Umfeld von multimodalen Computer-Applikationen den Entwicklungsprozess vereinfachen sollen, zielen vor allem darauf ab, wieder verwendbare, plattform- und modalitätsunabhängige Module und Komponenten zu identifizieren, Automatisierungspotentiale zu identifizieren und eine leicht erlernbare, gut lesbare und verständliche (grafische) Notation zur Beschreibung multimodaler Mensch-Maschine-Interaktion (MMI) bereit zu stellen, die insbesondere auch für Anwender ohne Programmierkenntnisse oder weiterführende technische Grundkenntnisse zugänglich ist.

In diesen Systemen sind bislang bereits zahlreiche solche grafische Notationen zur Modellierung von Computer-Applikationen und Markup-Sprachen zur Beschreibung von Mensch-Maschine-Interaktion bekannt. Beispielsweise ist der zurzeit wohl am weitesten verbreitete Ansatz zur Modellierung von Computer-Applikationen die Unified Modeling Language (UML) der Object Management Group (OMG). Zur Modellierung von Softwareprojekten, Geschäftsprozessen und Domain-Modellen stellt UML eine Fülle von grafischen Notationen zur Verfügung (beispielsweise Anwendungsfälle, Domänenmodelle, Aktivitätsdiagramme, Statusdiagramme etc.). Für die Beschreibung von Benutzerschnittstellen beziehungsweise der Mensch-Maschine-Interaktion ist UML jedoch verhältnismäßig ungeeignet. Zwar lassen sich mit Hilfe von Aktivitätsdiagrammen prinzipiell Aktivitätsabfolgen zwischen Mensch und Maschine beschreiben. Die Darstellung mit Hilfe der Aktivitätsdiagramme beschränkt sich dabei jedoch auf die Abbildung streng chronologischer Aktivitätsabfolgen. Bestehende Freiräume in der Mensch-Maschine-Interaktion, z.B. die Möglichkeit auf Seiten des Nutzers, zwischen unterschiedlichen Optionen auswählen zu können oder innerhalb bestimmter Rahmenbedingungen die zeitliche Abfolge seiner Handlungen selbst bestimmen zu können, kann mit den herkömmlichen Mitteln in UML nicht beschrieben werden.

Daneben existieren bereits verschiedene Ansätze auf Basis von Auszeichnungssprachen wie beispielsweise der User Interface Markup Language (UIML), Benutzerschnittstellen modalitätsneutral und plattformübergreifend zu beschreiben. Bei der UIML liegt der Fokus auf der Beschreibung der Benutzerschnittstelle (Elemente der Benutzerschnittstelle, Strukturierung der Elemente, Daten, Stile und Ereignisse) wobei die Beschreibung der Benutzerschnittstellenelemente von der Beschreibung der Programmlogik strikt getrennt ist. Ansätze wie UIML dienen damit vor allem der Beschreibung statischer Eigenschaften von Benutzerschnittstellen wie z.B. Strukturen und Stile. Auszeichnungssprachen wie UIML sind bis heute nicht unabhängig von den jeweiligen Zielplattformen und Zielmodalitäten. Da zudem noch Schwächen in der Beschreibung von Prozessabläufen bestehen, existieren Weiterentwicklungen wie z.B. DISL der C-Labs. Mit DISL, basierend auf einem UIML-Subset, wird einerseits versucht, zu einer generischeren Mensch-Maschine-Interaktionsbeschreibung zu kommen, die sich leichter auf die unterschiedlichen Zielplattformen und Modalitäten abbilden lässt. Darüber wird durch DISL eine Benutzerschnittstellen-Kontrolllogik hinzugefügt, bei der die Benutzerschnittstelle als Zustandsgraph modelliert wird und Aktionen auf Benutzerschnittstellenelemente die Zustandsübergänge auslösen.

Mit der Entwicklung von Auszeichnungssprachen zur Beschreibung von Benutzerschnittstellen werden im Allgemeinen die folgenden Ziele verfolgt: Einerseits soll es ermöglicht werden, Benutzerschnittstellen geräteunabhängig, also ohne spezifische Vorkenntnisse für die Zielplattformen zu definieren. Andererseits geht es um die Definition geräteunabhängiger, universell verwendbarer Applikationsbeschreibungen, die auf unterschiedliche Plattformen transformierbar sind und so dazu beitragen, den jeweiligen Entwicklungsaufwand zu reduzieren. Tools zur Modellierung der Mensch-Maschine-Interaktion wenden sich dabei überwiegend an solche Anwender, bei denen weder von Programmierkenntnissen noch von technischen Grundkenntnissen, beispielsweise über mögliche Zielplattformen und Zielmodalitäten, ausgegangen werden kann. Sie müssen daher auch dem Anspruch genügen, erlernbar, verständlich und lesbar zu sein. Auszeichnungssprachen genügen diesem Anspruch nur ungenügend. Der Ansatz von Systemen der oben genannten Art auf Basis grafischer Notationen besteht deswegen darin, eine zusätzliche Abstraktionsebene mit Transformationsregeln zu schaffen, die den Anwender des Tools vor Komplexität weiter entlastet.

Für die grafische Modellierung von Mensch-Maschine-Interaktion ist der ConcurTaskTrees-Ansatz von Paterno, Mancini und Meniconi Ausgangspunkt für die Ableitung zahlreicher grafischer Notationen. Systeme der oben genannten Art wie z.B. MMTeresa oder UsiXML bieten einen mehrschichtigen Lösungsansatz, der auf dem Ansatz der Model Drive Architecture (MDA) der Object Management Group (OMG) beruht und die Computer-Applikation in Form von unterschiedlichen Abstraktionsebenen umsetzt. Die unterschiedlichen Abstraktionsebenen repräsentieren dabei unterschiedliche Grade an Unabhängigkeit von Zielplattform und Modalitäten. Für die unterschiedlichen Abstraktionsebenen bieten die Systeme unterschiedliche Diagrammtypen mit jeweils spezifischen Notationen. Beginnend mit der obersten Abstraktionsebene mit vollständiger Unabhängigkeit von Zielplattform und Modalität bis hinunter in die zielplattform- und modalitätsspezifischen Ebenen erfolgt die Modellierung einer Computer-Applikation durch schrittweise Modellierung und halbautomatische Transformation zwischen den Abstraktionsebenen.

Insbesondere für komplexe Computer-Applikationen weist dieser Ansatz Schwachstellen auf bezüglich Lesbarkeit, Verständlichkeit und Erlernbarkeit. Komplexe Computer-Applikationen führen sehr schnell zu komplexen Baumstrukturen. Optionale und alternative Aufgaben, zwischen denen der Nutzer im Rahmen von Auswahlmenüs wählen kann, sind oftmals über den gesamten Auswahlbaum verteilt. Zudem deckt das mit diesem Ansatz erzeugbare Task-Tree-Diagramm einen eng abgegrenzten Aspekt der Applikation ab und fokussiert alleine auf die Mensch-Maschine-Interaktion. Zur Darstellung von Kontrolllogik zur Interaktions- und Prozessablaufsteuerung ist diese grafische Notation ungeeignet.

Der Erfindung liegt daher die Aufgabe zu Grunde ein System zur automatisierten Generierung einer Computer-Applikation vorzuschlagen, mittels welchem multimodale Computer-Applikationen vereinfacht plattformunabhängig modelliert werden können, so dass das System eine verhältnismäßig effiziente Einarbeitung eines Benutzers ermöglicht und verhältnismäßig wenig technisches Expertenwissen vom Benutzer erfordert.

### Darstellung der Erfindung

Die Aufgabe wird erfindungsgemäß durch ein System gelöst, wie es im unabhängigen Patentanspruch 1 definiert ist. Vorteilhafte Ausführungsvarianten des erfindungsgemäßen Systems ergeben sich aus den abhängigen Patentansprüchen. Das Wesen der Erfindung besteht im Folgenden: Ein System zur automatisierten Generierung einer Computer-Applikation umfasst eine computerbetriebene Modellierungseinheit und einen computerbetriebenen Projektgenerator. Dabei weist die Modellierungseinheit Erfassungsmittel zur grafischen Erfassung einer Komponente mittels einer vordefinierten Notation und Repräsentationsmittel zur Umwandlung der Komponente in eine Repräsentation auf. Der Projektgenerator weist Kompiliermittel zur Transformation der Repräsentation in die Computer-Applikation auf. Die Notation ist dabei eine universelle Notation, so dass durch die Erfassungsmittel der Modellierungseinheit sowohl eine Interaktionskomponente als auch eine Logikkomponente mittels der Notation in einem integrierten Modell grafisch erfassbar sind.

Die Interaktionskomponente kann dabei insbesondere zur Modellierung der Mensch-Maschine-Interaktion vorgesehen sein und die Logikkomponente zur Modellierung des Anwendungsablaufs und der Prozesskontrolle, also beispielsweise des Geschäftsprozesses. Entsprechend kann die Notation Modellierungsobjekte sowohl aus der Welt der Mensch-Maschine-Interaktion als auch aus der Welt der Geschäftsprozessbeschreibung umfassen. Indem somit Modellierungsobjekte aus den erwähnten beiden Welten zu einem Metamodell vereint werden, wird durch die Notation ermöglicht, dass die Modellierung beider Welten in einem grafischen Modell durchgeführt wird. Entsprechend wird die Notation hier als universelle Notation bezeichnet. Dabei kann die Notation so ausgestaltet sein, dass die Interaktionskomponente und die Logikkomponenten als solche von einem Benutzer des Systems nicht differenzierbar sind. Aber dennoch sind beide Sichtweisen in dem einzigen grafischen Modell enthalten. Die Repräsentation kann der Wiedergabe des grafischen Modells entsprechen, wobei sie vorzugsweise mittels einer Auszeichnungssprache definiert ist beispielsweise im Extensible Markup Language Metadata Interchange (XMI) Format.

Zur Strukturierung komplexer Computer-Applikationen mit zahlreichen Komponenten können mittels der Notation der Modellierungseinheit eine Vielzahl von Diagrammen als Teile des integrierten Modells erzeugt werden. Eine Verbindung zwischen den Diagrammen kann sich mit Hilfe von <connector> Objekten realisieren lassen und Objekte innerhalb eines einzelnen Diagramms, die inhaltlich in einem engen Zusammenhang stehen, können wiederum in unterschiedlichen <abstractView> Objekten zusammengefasst werden. Ein <abstractView> Objekt kann damit immer alle für eine Aufgabe (z.B. Login) relevanten Objekte bündeln.

Mit dem erfindungsgemäßen System kann die Computer-Applikation mittels der Modellierungseinheit vollständig und plattformunabhängig grafisch modelliert werden. Eine manuelle oder technische Nachbereitung des mit der universellen Notation in der Repräsentation abgelegten grafischen Modells kann vermieden oder minimiert werden. Der Projektgenerator kann dann die entsprechende Zielplattform bei der Transformation der Repräsentation in die lauffähige Computer-Applikation berücksichtigen.

Die Erfindung bietet also eine einzige grafische Notation, die alle generischen, endgeräte-, modalitäts- und kontextabhängigen Komponenten der Computer-Applikation in einem einzigen integrierten Modell bzw. Diagramm vereint. Für die multimodale Interaktion in unterschiedlichen Anwendungskontexten (z.B. zu hause am Laptop, unterwegs am mobilen Endgerät, im Auto über Autofreisprecheinrichtung etc.) können zwei unterschiedliche Interaktionsmodi vorgesehen sein. Die Notation vereint die beiden unterschiedlichen Interaktionsmodi in einem Modell bzw. Diagramm und bietet damit eine größtmögliche Unabhängigkeit vom Kontext der Interaktion, also vom jeweiligen Endgerät und den damit zur Verfügung stehenden Ein- und Ausgabemodalitäten. Die Notation greift dabei auf eine übersichtliche Palette an Objekten zurück und verbessert dadurch Erlernbarkeit, Verständlichkeit und Lesbarkeit. Die Notation vereint damit die folgenden Aspekte in einem einzigen integrierten Modell bzw. Diagramm: Modellierung der Mensch-Maschine-Interaktion; Modellierung der Kontrolllogik für die Prozesssteuerung; Automatische Ableitung eines Datenmodells; und Kontextübergreifende Modellierung durch Berücksichtigung zweier Interaktionsmodi (GUI- und VUI-zentriert). Da die Notation alle notwendigen Informationen in einem einzigen Modell bzw. Diagramm vereint, kann ein Generierungsalgorithmus im Projektgenerator implementiert werden, der die Repräsentation transformiert, so dass alle geräte-, modalitäts- und kontextübergreifenden Komponenten der Computer-Applikation enthalten sind und auf der definierten Laufzeitumgebung lauffähig sind.

Vorzugsweise umfasst der Projektgenerator Datenmodellerzeugungsmittel, mit denen ein der Komponente entsprechendes Datenmodell bei der Transformation der Repräsentation in die Computer-Applikation erzeugbar ist. Mit solchen Datenmodellerzeugungsmitteln wird ermöglicht, dass das Datenmodell nicht explizit modelliert werden muss, sondern automatisch bei der Projektgenerierung aus der Repräsentation erzeugt wird, ohne dass ein Benutzer des Systems Kenntnisse in der Datenmodellierung haben muss. Es kann auch eine Differenzierung bei der Erzeugung des Datenmodells im System implementiert sein, mit der beispielsweise zwischen änderbaren und nicht änderbaren Objekten unterschieden werden kann, wobei die änderbaren Objekte automatisch im Datenmodell vertreten sind und die nicht änderbaren nicht. Der Projektgenerator kann sowohl die Komponenten des Interaktionsmanagements generieren als auch die Code-Stubs für die Präsentation der Interaktion über unterschiedliche Modalitäten und unterschiedliche Zielplattformen. Das Interaktionsmanagement kann dabei völlig unabhängig von Zielplattform und Modalität sein. Die erzeugten Präsentationskomponenten dienen dazu, die abstrakten Ereignisse aus dem Interaktionsmanagement auf konkrete Präsentations-Widgets für die jeweiligen Modalitäten und Zielplattformen abzubilden.

Mit Vorteil ist die Notation so ausgestaltet, dass durch die Erfassungsmittel der Modellierungseinheit Interaktionskomponenten mehrerer Modalitäten mittels der Notation im integrierten Modell grafisch erfassbar sind. Dabei können die Erfassungsmittel eine Interaktion insbesondere eine Mensch-Maschine-Interaktion abstrakt beschreiben, das heißt unabhängig davon, über welche Modalitäten diese Interaktion abgewickelt wird. Damit kann erreicht werden, dass das integrierte Modell keine modalitätsspezifische Informationen enthält, was die Bedienung des Systems vereinfachen kann. Bei Interaktionskomponenten mehrerer Modalitäten also bei Computer-Applikationen mit multimodaler Interaktion, die sich auf die Ein- und Ausgabemodalitäten Graphical User Interface (GUI) und Voice User Interface (VUI) stützt, sind bei insgesamt vier Ein- und Ausgabekomponenten rein theoretisch bereits 16 Betriebszustände möglich, je nachdem welche Ein- und Ausgabemodalitäten jeweils aktiviert oder deaktiviert sind. In der Mensch-Maschine-Interaktion sind zudem zwei vollkommen gegensätzliche Interaktionsmodi ableitbar: einerseits die vorwiegend nutzergetriebene Interaktion und andererseits die vorwiegend systemgetriebene Interaktion. In der nutzergetriebenen Interaktion bleibt die Computer-Applikation vorwiegend passiv, das heißt ein Fortschritt in der Mensch-Maschine-Interaktion wird durch Eingaben eines Nutzers initiiert, während die Computer-Applikation dann auf diese Eingaben reagiert. Der Nutzer bestimmt dabei selbst das Tempo und in einem gewissen Rahmen auch die Chronologie seiner Handlungen. Im systemgetrieben Modus wird die Computer-Applikation von sich aus aktiv und fordert den Nutzer zu einer Eingabe auf. Fortschritt wird dadurch erzielt, dass der Nutzer auf die Eingabeaufforderungen der Computer-Applikation reagiert, das heißt die Computer-Applikation bestimmt weitgehend Tempo und Chronologie der Ereignisse. Unter Berücksichtigung dieser zwei Interaktionsmodi sind bei den nur vier Ein- und Ausgabemodi so rein theoretisch bereits 32 Betriebszustände möglich. Mit jeder zusätzlichen Modalität potenzieren sich die möglichen Betriebszustände.

Um diesem Problem zu begegnen können im erfindungsgemäßen System folgende Vereinfachungen getroffen werden: es wird davon ausgegangen, dass es zwei Kernmodalitäten für die Mensch-Maschine-Interaktion gibt, nämlich GUI und VUI. Weitere Ein- und Ausgabemodalitäten besitzen nur unterstützenden Charakter, ihnen kommt jedoch keine tragende Rolle zu. Die Fokussierung auf jeweils eine der beiden Kernmodalitäten kann insgesamt zwei unterschiedliche Interaktionsmodi definieren, die die universelle Notation sowie das automatisch daraus generierte Dialogmanagement der Computer-Applikation automatisch unterstützt. Sie können als GUI- und VUI-zentrierte Interaktionen bezeichnet werden. Mit dieser Einführung der beiden Interaktionsmodi und deren Aufnahme im integrierten Modell des Systems kann erreicht werden, dass die Modellierung nicht nur unabhängig von Modalität und Zielplattform ist, sondern auch eine möglichst umfassende Unabhängigkeit vom Anwendungskontext bietet.

Von GUI-zentrierter Interaktion ist also dann die Rede, wenn sich die Mensch-Maschine-Interaktion im Wesentlichen auf die Ausgabemodalität Grafik und die Eingabemodalitäten Tastatur, Maus und/oder Stift stützt. Nutzungsszenarien für einen solchen Interaktionsmodus können grundsätzlich alle stationären Situationen des Nutzers sein, in denen er nicht unterwegs ist und uneingeschränkt dazu in der Lage ist, Augen und Hände zu benutzen. Andere Modalitäten wie z.B. Mikrofon und Lautsprecher spielen nur eine unterstützende aber keine tragende Rolle bei dieser Mensch-Maschine-Interaktion. Sprachbedienung muss damit auch nur für ausgewählte Objekte eines Views angeboten werden, für die eine Sprachbedienung gegenüber den herkömmlichen Eingabemöglichkeiten wie Tastatur, Maus oder Stift zusätzlichen Komfort bietet. Sprachsteuerung bringt große Verbesserungen beispielsweise für Texteingaben oder Auswahloperationen, die auf mobilen Endgeräten, bei denen nur eine kleine Tastatur oder eine Softwaretastatur zur Verfügung steht, große Mühe kostet. Eine generelle Unterstützung durch globale, nicht auf bestimmte Eingaben fokussierte Spracherkennungsgrammatiken, aktivierbar beispielsweise durch eine Push-To-Talk Taste am Gerät, ist nicht nötig. Die GUI-zentrierte Interaktion ist nutzergetrieben. Eine Benutzerführung wird durch die Grafik geleistet. Im Rahmen der jeweils aktivierten grafischen Objekte hat der Nutzer die Möglichkeit, sowohl Tempo als auch Reihenfolge seiner Eingaben selbstständig zu bestimmen.

VUI-zentrierte Interaktion stützt sich dagegen im Wesentlichen auf die Ausgabemodalität Lautsprecher. Andere Modalitäten sind verfügbar aber stehen nicht im Mittelpunkt. Anwendungsszenarien können beispielsweise Situationen sein, in denen der Nutzer mobil ist und seine Hände und Augen nur eingeschränkt oder gar nicht benutzen kann, z.B. unterwegs im Auto. Da im VUI-zentrierten Interaktionsmodus davon ausgegangen werden muss, dass der Nutzer nicht ausreichende Aufmerksamkeit auf die grafischen Ausgaben richten kann, muss das Interaktionsmanagement der Computer-Applikation die Nutzerführung übernehmen. Das Dialogmanagement der Computer-Applikation kann dazu in der Lage sein, alle für die Interaktion relevanten Informationen im Datenmodell zu speichern. Falls der einem änderbaren Eingabeobjekt zugeordnete Slot im Datenmodell bereits gefüllt ist, beispielsweise als Resultat eines zuvor beendeten Views, wo der Slot schon gefüllt wurde und als Übergabeparameter dem aktuellen View mit übertragen wurde, oder durch Überbeantwortung einer zuvor gestellten Frage oder aufgrund einer Initialisierung, so überspringt das Dialogmanagement den zur Abfrage des Slots vorgesehenen Dialogschritt automatisch. Das Dialogmanagement der Computer-Applikation kann den nächsten Dialogschritt auf der Grundlage der bis dahin gefüllten Slots im Datenmodell, des aktuellen Zustands der Interaktion sowie der temporalen beziehungsweise logischen Relationen und Kontrollelemente zwischen den Interaktoren automatisch berechnen und ist daher dazu in der Lage, den Nutzer intelligent durch den Dialog zu führen. Da im VUI-zentrierten Modus das Dialogmanagement absolute Kontrolle über den Verlauf der Interaktion hat, weiß das Dialogmanagement so zu jedem Zeitpunkt, welche Spracherkennungsgrammatik im aktuellen Zustand der Interaktion zu laden ist. Spezifische Mikrofonbuttons für bestimmte grafische Eingabeobjekte wie Texteingaben oder Auswahloperationen werden nicht mehr benötigt. Ein genereller Push-To-Talk Schalter reicht aus, um die Spracherkennung zu aktivieren und die zum jeweils aktuellen Interaktionsstatus passende Spracherkennungsgrammatik zu laden. Falls keine Push-To-Talk Funktionalität am Endgerät zur Triggerung der Spracherkennung zur Verfügung steht, kann auch das Dialogmanagement diese Verantwortung, z.B. durch Abspielen eines Pieptons, übernehmen.

Der Übergang zwischen den Interaktionsmodi kann sowohl explizit als auch implizit erfolgen. Implementiert können die Zustandsübergänge in einem Modality Control Modul des Interaktionsmanagements der Computer-Applikation werden. Ein Übergang vom VUI-zentrierten zum GUI-zentrierten Modus kann beispielsweise in dem Moment automatisch erfolgen, in dem der Nutzer wieder auf die Eingabemodalitäten Tastatur, Maus oder Stift zurückgreift. Ein Übergang zurück zum VUI-zentrierten Modus kann dadagegen explizit durch Aktivierung durch den Nutzer erfolgen, beispielsweise, indem er einen dafür vorgesehen Button oder, falls vorhanden, den Push-To-Talk Schalter des Endgeräts betätigt.

Im erfindungsgemäßen System können somit die Interaktionskomponenten und die Logikkomponenten für verschiedene Anwendungskontexte, beispielsweise VUI- und GUI-zentriert identisch und damit wieder verwendbar bzw. übertragbar sein. Somit umfasst das integrierte Modell Metaobjekte zur Abbildung beider Modi und kann damit beide Modi in einem einzigen Diagramm abbilden. Die Modellierung erfolgt dabei aber in einem einzigen integrierten Diagramm mittels der universellen Notation. Entsprechend kann die universelle Notation nicht nur die Modellierung der Mensch-Maschine-Interaktion und die Modellierung der Prozesskontrolllogik in einem einzigen Modell bzw. Diagramm ermöglichen, sondern kann zugleich auch die beiden erwähnten Interaktionsmodi GUI- und VUI-zentriert beschreiben. Ähnliche Systeme bzw. Computer-Applikationen setzen in der Regel nur einen der beiden Interaktionsmodi um, also entweder nutzergetrieben, das heißt GUI-zentriert, oder systemgetrieben, das heißt VUI-zentriert.

Vorzugsweise umfasst die Notation des erfindungsgemäßen Systems grafische Interaktionsobjekte, Relationen und Kontrollelemente, wobei die Interaktionsobjekte mittels der Relationen und Kontrollelemente gruppierbar und verbindbar sind. Interaktionsobjekte in zahlreicher Ausgestaltung können dabei zur Repräsentierung von Mensch-Maschine-Interaktion vorgesehen sein, wobei unterschieden wird, ob es sich um reine Ausgaben der Computer-Applikation oder um benötigte Eingaben des Nutzers oder um Systemoperationen handelt. Temporale und logische Relationen dienen dazu, zur Beschreibung der Mensch-Maschine-Interaktion die Interaktionsobjekte miteinander geeignet in Beziehung zu setzen.

Gleichzeitig ermöglicht die Notation auch die herkömmliche Beschreibung von Geschäftsprozessen in Form von Prozessablaufdiagrammen und zwar im selben Diagramm, indem sie auch Metaobjekte aus der klassischen Prozessablaufsteuerung miteinschließt, wie beispielsweise das <transition> Objekt oder das <choice> Objekt, die dazu dienen, die Interaktionsobjekte miteinander in Beziehung zu setzen. Auf diese Weise können Objekte und Strukturen der Prozessablaufmodellierung wie zum Beispiel Systemoperationen mit solchen aus der Modellierung der Mensch-Maschine-Interaktion verbunden werden und eine integrierte Modellierung wird durch die universelle Notation ermöglicht.

Mit Vorteil umfassen die Relationen der Notation logische Relationen und temporale Relationen. Solche temporale und logische Relationen dienen zur Modellierung der Mensch-Maschine-Interaktion. Dabei können logische Relationen in Form von Gruppierungselementen realisiert werden, wobei Gruppierungselemente zusammengesetzte Objekte sind, die weitere Objekte enthalten dürfen. Die in zusammengesetzten Objekten enthaltenen Objekte werden auch als Kinder bezeichnet. Als logische Gruppierungselemente können beispielsweise <or> und <and> zur Verfügung gestellt werden. Das <or> Objekt kann dabei ein logisches XOR beschreiben, d.h. das <or> gilt genau dann als erfüllt und abgeschlossen, wenn eines der Kinder beendet wurde. Das <and> kann dagegen erst dann als abgeschlossen gelten, wenn alle Kinder beendet wurden. Sowohl für <or> Objekte als auch für <and> Objekte können im VUI-zentrierten Interaktionsmodus zusätzliche Dialogschritte eingefügt werden. Für <and> Objekte kann dem mit der Computer-Applikation interagierenden Nutzer im Rahmen des zusätzlichen Dialogschritts die Möglichkeit gegeben werden, die für das <and> Objekt relevanten Informationen, repräsentiert durch die Kinder des <and> Objekts, in einem einzigen Satz einzugeben. Werden dabei nicht alle notwendigen Informationen eingegeben, kann das Dialogmanagement der Computer-Applikation die dann noch fehlenden Informationen in gesonderten Dialogschritten einholen. Das <or> Objekt kann für den VUI-zentrierten Interaktionsmodus einen zusätzlichen Dialogschritt generieren, der es dem Nutzer erlaubt, explizit zwischen den Alternativen des <or>, repräsentiert durch die Kinder des <or>, auszuwählen. Das Dialogmanagement der Computer-Applikation kann auch dazu in der Lage sein, eine implizite Entscheidung für eine der Optionen des <or> zu treffen, wenn der Nutzer sich nicht explizit für eine Option entscheidet sondern im Rahmen seiner Antwort bereits Informationen zu einer der Optionen des <or> angibt. Der Dialogschritt kann automatisch übersprungen werden, wenn dem Dialogmanagement bereits gefüllte Slots zu einer der Alternativen des <or> vorliegen.

Temporale Relationen können durch gerichtete Pfeile repräsentiert werden, wobei am Ausgangspunkt der Relation das auslösende Objekt liegt und wobei die Beendigung des auslösenden Objekts die Relation triggert. Als temporale Relationen können <transition>, <enable> und <disable> zur Verfügung stehen. Sowohl <transition> als auch <enable> löst die Aktivierung des Objekts aus, das sich am Endpunkt der Relation befindet. Die Aktivierung eines Objekts äußert sich dabei darin, dass das Dialogmanagement dazu bereit und in der Lage ist, die mit dem Objekt verbundenen Events zu verarbeiten und dann gleichzeitig die grafische Darstellung des Objekts aktiviert wird. Dementsprechend triggert die Beendigung des Objekts am Startpunkt einer <disable> Relation die Deaktivierung des Objekts am Endpunkt der Relation, d.h. das Dialogmanagement ignoriert darauf hin alle mit dem Zielobjekt verbundenen Ereignisse und deaktiviert die grafische Darstellung des Objekts. Als weitere Möglichkeiten von temporalen Relationen können <selfDisable> und <refresh> definiert sein. Dabei startet und endet <selfDisable> am selben Objekt, wodurch die Beendigung des Objekts und gleichzeitig dessen Deaktivierung bewirkt werden kann. Die Beendigung des Objekts am Startpunkt eines <refresh> kann die Aktualisierung des Objekts am Endpunkt der Relation triggern.

Im GUI-zentrierten Modus kann die <transition> Relation implizit auch die Aktivierung des Zielobjekts bewirken. Im VUI-zentrierten Modus können die <transition> Relationen eine zentrale Rolle spielen, denn sie markieren den systemgetriebenen Pfad durch die Computer-Applikation. Neben den bis dahin gefüllten Slots im Datenmodell, dem aktuellen Zustand der Interaktion und den logischen Relationen können die <transition> Relationen und die damit verbundenen Kontrollelemente die zentrale Rolle bei der Berechnung des nächsten Dialogschrittes spielen. Bestimmte Objekte wie <entry> Punkte anderer <abstractView> Objekte, <choice> Objekte und Operationen können generell nur über <transition> Relationen verbunden werden, da sie Objekte zur Beschreibung von klassischen Kontroll- und Prozessablaufstrukturen sind. Im Falle von <transition> Relationen, die zwei unterschiedliche <abstractView> Objekte miteinander verbinden, ist es möglich, auch Datenobjekte zwischen den Views zu transferieren. Für die akustische Ausgabe von Informationen und Prompts im VUI-zentrierten Modus kann sich über <transition> Relationen die chronologische Abfolge der Ausgaben exakt festlegen lassen.

Vorzugsweise umfasst die Notation des erfindungsgemäßen Systems Regeln und Bedingungen, wobei die Regeln und Bedingungen festlegen, in welcher Weise die Interaktionsobjekte mittels der Relationen und Kontrollelemente miteinander in Beziehung setzbar sind. Mittels dieser Regeln und Bedingungen können Objekte und Strukturen der Prozessablaufmodellierung mit solchen aus der MMI-Interaktionmodellierung verbunden werden.

Mit Vorteil umfasst das System Validierungsmittel, die die Einhaltung der definierten Regeln und Bedingungen prüfen, mit denen Interaktionsobjekte mittels der Relationen und Kontrollelemente miteinander in Beziehung gesetzt sind. Solche Validierungsmittel können Teil der Modellierungseinheit und/oder Teil des Projektgenerators sein. Sie erlauben eine effiziente Prüfung der Repräsentation, was dessen Qualität verbessern kann und somit eine effiziente Generierung der Computer-Applikation ermöglicht.

Vorzugsweise können die Interaktionsobjekte Ausgabeobjekte, Eingabeobjekte und Operationsobjekte aufweisen. Reine Systemausgaben als Ausgabeobjekte können Ereignisse mit einseitigem Signalweg von der Computer-Applikation in Richtung des Nutzers definieren, ohne dass eine Nutzerreaktion vom System erwartet und verarbeitet wird. Je nach auszugebenden Datenformat können in der Notation des Systems unterschiedliche Ausgabeobjekte definiert sein. Beispielsweise <textOutput>, <audioOutput>, <pictureOutput> and <videoOutput>. Zusätzlich kann ein <alert> Objekt eine Systemausgabe vom Typ Textausgabe definieren, bei der durch eine besonders akzentuierte Präsentation der Nachricht sicher gestellt werden soll, dass der Anwender Notiz von der Nachricht nimmt.

Weiter werden Interaktionsobjekte, die eine Eingabe vom Nutzer erwarten, unter dem Begriff Eingabeobjekte zusammengefasst. Solche Eingabeobjekte können dabei nicht nur die Nutzereingabe sondern auch die Eingabeaufforderung von Seiten der Computer-Applikation an den Nutzer umfassen und Eskalationsstrategien von Seite der Computer-Applikation im Falle missglückter Nutzereingaben. Auch kann unter den Eingabeobjekten wiederum zwischen änderbaren und anklickbaren Objekten unterschieden werden. Dabei zeichnen sich änderbare Objekte dadurch aus, dass jedes von ihnen im Datenmodell des Dialogmanagers der Computer-Applikation automatisch durch sein eigenes Datenobjekt, dem sogenannten Slot, repräsentiert wird. Je nach Art der Eingabe kann bei änderbaren Objekten nochmals zwischen Editier- und Auswahlobjekten unterschieden werden. Dabei zählen zu den Editierobjekten je nach Format des einzugebenden Textes die Objekte <textEdit>, <numEdit>, <timeEdit> und <dateEdit>. Bei Auswahlobjekten kann unterschieden werden, ob ein Element oder mehrere Objekte aus n auszuwählen sind (<singleSelect>, <multibleSelect>). Die Auswahl kann sich sowohl auf eine Liste statischer, bereits vor der Laufzeit bekannter Optionen als auch auf eine Liste dynamischer, erst zur Laufzeit bekannter Optionen beziehen. Als weitere Spezialfälle für eine Auswahl kann das <menu> Objekt für eine "1 aus n" Auswahl aus statischen Optionen stehen und das <toggle> Objekt für die Möglichkeit, zwischen 2 statischen Optionen umschalten zu können. Im Gegensatz dazu kann es sich bei den anklickbaren Objekten um Interaktionsobjekte handeln, die im Datenmodell des Dialogmanagers nicht durch einen eigenen Slot repräsentiert werden. Als Eingabe von Seiten des Nutzers kann die Computer-Applikation lediglich eine Aktivierung des Objekts erwarten, vergleichbar z.B. mit einem Link oder Button auf einem GUI. Es kann zwischen <activate> und <confirm> unterschieden werden, je nachdem ob sich das Interaktionsobjekt inhaltlich eher auf die Aktivierung nachfolgender Prozesse oder auf die Bestätigung/Einverständiniserklärung zuvor absolvierter Schritte bezieht.

Mit den Operationsobjekten können beispielsweise Prozesse beschrieben werden, die nicht unmittelbar zur Mensch-Maschine-Interaktion beitragen. Je nachdem, ob es sich um Prozesse handelt, die eher auf dem Client oder Server stattfinden, kann zwischen <clientOperation>, und <serverOperation> unterschieden werden. Die Objekte des MMI-Profils können ganz allgemein zur Abbildung von proprietären Prozessen dienen, die durch Meta-Objekte des Systems nicht abgebildet werden können, wie z.B. Konsistenz- und Wertebereichsprüfungen oder Datenbankabfragen. Als spezielle Typen der clientseitigen Operationen können Prozesse gelten, die der Aufzeichnung von Daten dienen. Je nach aufgezeichnetem Datentyp kann dabei zwischen <audioRecord>, <pictureRecord>, <videoRecord> und <lbsRecord> (Aufzeichnung von positionsbestimmenden Daten) unterschieden werden. Über <setData> können Datenobjekte im Datenmodell des Dialogmanagers der Computer-Applikation gesetzt werden.

Weiter kann die Notation zusätzlich Kontrollelemente zur Beschreibung von Prozessablaufstrukturen umfassen. Ein zentrales Kontrollelement kann dabei das <choice> Objekt sein, das die Möglichkeit für Verzweigungen im Prozessablauf bietet. Da es hierbei um die Darstellung von Prozessablaufkontrolle geht, sollten <choice> Objekte ausschließlich über <transition> Relationen eingefügt werden. Die ausgehenden Transitionen eines <choice> Objektes können mit Bedingungen versehen werden, die sich auf Objekte im Datenmodell beziehen. Die ausgehende Transition, deren Bedingung zutrifft, wird zur Laufzeit ausgeführt. Falls eine der Bedingungen komplexere Relationen, also mehr als nur eine <transition> Relation, nach sich zieht, kann das <splitter> Objekt dazu dienen, die weiteren temporalen Relationen, die der Bedingung folgen, anzubinden. Das <splitter> Objekt kann dabei als Endpunkt für die vom <choice> Objekt abgehende mit einer Bedingung versehenen Transition dienen und als Ausgangspunkt für die alle temporalen Relationen, die der Bedingung folgen.

Vorzugsweise weist die Modellierungseinheit Visualisierungsmittel zur gleichzeitigen kombinierten Darstellung der Interaktionskomponente und der Logikkomponente auf. Mit Vorteil sind die Visualisierungsmittel der Modellierungseinheit dabei dazu ausgestaltet, zwei unterschiedliche Interaktionsmodi darzustellen. Die beiden Interaktionsmodi können dabei zwei mögliche Implementierungen der Mensch-Maschine-Interaktion beschreiben und sind zusammen mit der Prozessablaufsteuerung in einem einzigen Diagramm vereint. Solche Visualisierungsmittel ermöglichen eine integrierte Darstellung im Rahmen eines Modells beziehungsweise Diagramms, wobei die oben beschriebenen unterschiedlichen Interaktionsmodi miteinbezogen sein können.

Ein anderer Aspekt der Erfindung betrifft ein Computerprogramm zum Betreiben des oben beschriebenen Systems. Ein solches Computerprogramm umfasst die Modellierungseinheit des Systems und kann auch den Projektgenerator des Systems umfassen.

### Kurze Beschreibung der Zeichnungen

Im Folgenden wird das erfindungsgemäße System und das erfindungsgemäße Computerprogramm unter Bezugnahme auf die beigefügten Zeichnungen anhand von Ausführungsbeispielen detaillierter beschrieben. Es zeigen:
- Fig. 1: eine grafische Benutzeroberfläche eines Ausführungsbeispiels eines erfindungsgemäßen Computerprogramms zum Betreiben eines Ausführungsbeispiels eines erfindungsgemäßen Systems;
- Fig. 2: eine schematische Darstellung eines Ausführungsbeispiels eines Projektgenerators des Systems von Fig. 1;
- Fig. 3: eine schematische Darstellung eines Ausführungsbeispiels einer Architektur einer mittels des Systems von Fig. 1 generierten Computer-Applikation;
- Fig. 4: ein mittels des Computerprogramms von Fig. 1 erzeugtes Diagramm eines ersten Teils eines integrierten Modells der Computer-Applikation von Fig. 3;
- Fig. 5: ein mittels dem Computerprogramm von Fig. 1 erzeugtes Diagramm eines zweiten Teils des integrierten Modells der Computer-Applikation von Fig. 3; und
- Fig. 6: ein mittels dem Computerprogramm von Fig. 1 erzeugtes Diagramm eines dritten Teils des integrierten Modells der Computer-Applikation von Fig. 3.

### Weg(e) zur Ausführung der Erfindung

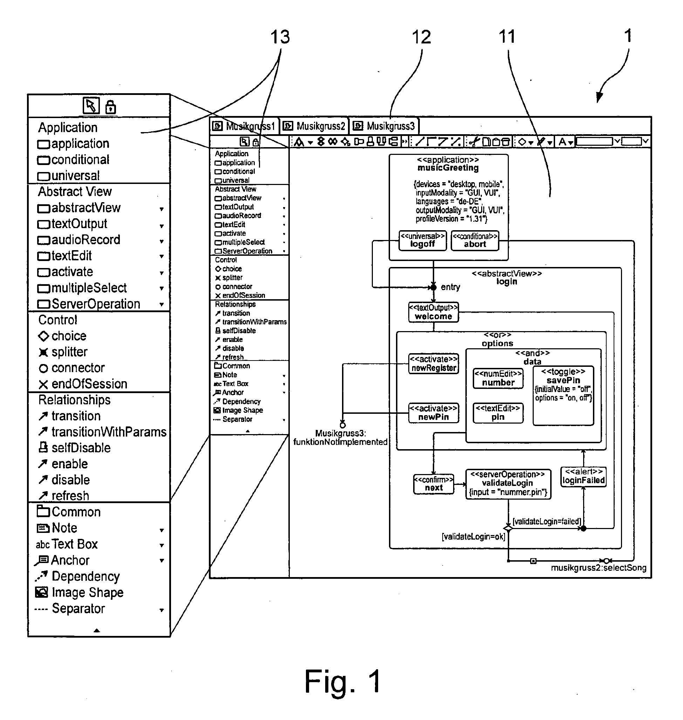

In Fig. 1 ist eine grafische Benutzeroberfläche 1 (GUI) eines erfindungsgemäßen Computerprogramms zum Betreiben eines erfindungsgemäßen Systems gezeigt. Die GUI 1 kann beispielsweise auf einem Monitor eines Computers, auf dem das Computerprogramm ausgeführt wird, erzeugt werden. Beispielsweise kann die GUI 1 über die Maus und die Tastatur des Computers von einem Applikationsentwickler bedient werden. Die GUI 1 weist einen Diagrammbereich 11 als Visualisierungsmittel auf, in dem eine schematische Darstellung eines Teils eines integrierten Modells einer Computer-Applikation, die mittels des Systems vom Applikationsentwickler erzeugt wird, angezeigt wird. Die GUI 1 weist einen Reiterbereich 12 auf, mittels dem zwischen mehreren schematischen Darstellungen verschiedener Teile des Modells der Computer-Applikation gewechselt werden kann. Als universelle Notation des Systems für die grafische Modellierung ist dabei ein Metamodell definiert, das in diesem Ausführungsbeispiel als MMI-Profil bezeichnet wird. Es umfasst eine Vielzahl von Objekten inklusive Regeln und Constraints für die grafische Modellierung von Computer-Applikationen. Diese Objekte sind unter anderem in einer Objektleiste 13 des GUI 1 bereitgestellt, so dass der Applikationsentwickler die benötigten Objekte daraus entnehmen kann und beispielsweise im Diagrammbereich 11 zur Modellierung einsetzen kann.

Zur Strukturierung komplexer Computer-Applikationen stellt das MMI-Profil dabei insgesamt zwei Konzepte bereit. Zum einen lässt sich das Modell der Computer-Applikation in eine Vielzahl von Diagrammen unterteilen. Eine Verbindung zwischen den Diagrammen lässt sich mit Hilfe von <connector> Objekten realisieren. Objekte innerhalb eines einzelnen Diagramms, die inhaltlich in einem engen Zusammenhang stehen, lassen sich wiederum in unterschiedlichen <abstractView> Objekten zusammenfassen. Ein <abstractView> Objekt bündelt damit immer alle für eine Aufgabe (Task) wie z.B. eine Login-Funktionalität relevanten Objekte.

Die Objekte für die grafische Modellierung von Computer-Applikationen umfassen im MMI-Profil insbesondere alle oben beschriebenen Objekte also beispielsweise Interaktionsobjekte, Regeln, Bedingungen, Relationen und Kontrollelemente. Damit wird eine integrierte Modellierung sowohl der Interaktionskomponenten der Computer-Applikation als auch der Logikkomponenten ermöglicht, ohne dass sich der Applikationsentwickler darum kümmern muss, welcher Art die jeweilige Komponente ist. Als Output der grafischen Modellierung der Computer-Applikation mittels des MMI-Profils erzeugt das Computerprogramm ein aus den in den mehreren Diagrammen dargestellten Teilen des Modells eine Extensible Markup Language Metadata Interchange (XMI) Datei als Repräsentation .

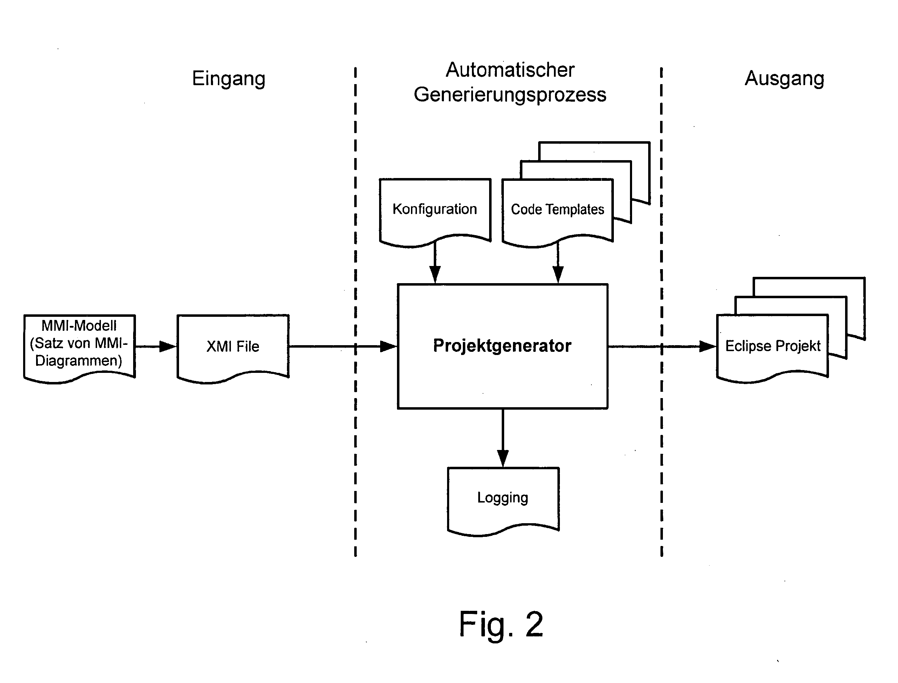

In Fig. 2 ist ein Ausführungsbeispiel eines Projektgenerators des Systems gezeigt, der Kompiliermittel zur Transformation der XMI-Datei in die Computer-Applikation umfasst. Insbesondere dient der Projektgenerator zur Transformation des mittels des MMI-Profils erstellten Modells in ein Eclipse-Projekt, das in einer Laufzeitumgebung lauffähig ist. Unter Eclipse wird in diesem Zusammenhang ein Open-Source-Framework zur Entwicklung von Software nahezu aller Art verstanden, wobei dieses hier als Entwicklungsumgebung für die Programmiersprache Java genutzt wird. Entsprechend ist die Laufzeitumgebung hier eine Web-Anwendung, die auf Java-Bibliotheken basiert. Die grafische Modellierung der Applikation erfolgt wie oben beschrieben mit Hilfe der durch das MMI-Profil definierten Notation.

Der Projektgenerator kompiliert das grafische Modell im XMI-Format in das Eclispe-Projekt, das dann direkt auf der definierten Laufzeitumgebung lauffähig ist. Dabei erzeugt der Projektgenerator auch automatisch das zugehörige Datenmodell. Für die Validierung des grafischen Modells auf Grundlage der im Metamodell definierten Constraints dient ein im Projektgenerator implementierter Validierungsprozess, der die Syntax des grafischen Modells prüft und alle Regelverstöße im grafischen Modell ermittelt und ausgibt. Erst wenn die Validierung des grafischen Modells fehlerfrei beendet wird, generiert ein Kompilierungsalgorithmus das Eclipse-Projekt inklusive der vollständigen Projektstruktur, den notwendigen XML-Konfigurationsdateien und Java-Bibliotheken, den SCXML-Dokumenten für das Interaktionsmanagement, den zielplattformspezifischen Stubs für die Präsentation (HTML, VoiceXML, SRGS etc.) und den Stubs zur Backend-Anbindung. Die generierten Quellen können im Anschluss auch noch manuell modifiziert oder vervollständigt werden. Die drei Prozesse der Applikationsentwicklung grafische Modellierung, Validierung und Kompilierung sind schließlich als Eclipse-Plugin umgesetzt.

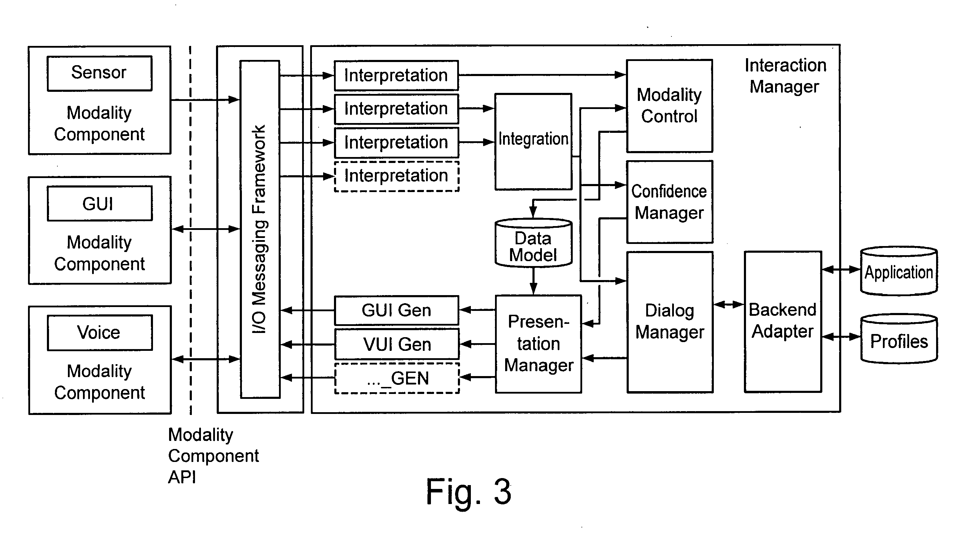

In Fig. 3 ist ein Ausführungsbeispiel einer Architektur der Laufzeitumgebung der Computer-Applikation dargestellt. Dabei folgt diese Architektur im Wesentlichen der vom Worid Wide Web Consortium (W3C) empfohlenen Architektur für multimodale Applikationen unter Verwendung der dazu vom W3C empfohlenen Standards.

Die Interpretationskomponenten (entweder client- oder serverseitig) transformieren dabei die Ereignisse (Events) von den Modalitätskomponenten in interne Events für das Interaktionsmanagement. Zur Repräsentierung semantischer Interpretationen wird als Standard "Emma" verwendet. Die Integrationskomponente dient zum Vereinen von Events unterschiedlicher Modalitätskomponenten, um damit gemischt modale Eingaben zu ermöglichen. Zum Beispiel deutet ein Anwender mit einem Stift auf ein Objekt und sagt zeitgleich "kaufen".

Die Modality Control Komponente verarbeitet Events vom Client, die ein Umschalten des Interaktionsmodus verursachen sollen. Für die Interaktion in unterschiedlichen Anwendungskontexten sind insgesamt zwei unterschiedliche Interaktionsmodi definiert. Darüber hinaus verarbeitet die Komponente alle Events, die mit der Aktivierung oder Deaktivierung von Ein- und Ausgabemodalitäten zu tun haben. Die Komponente aktualisiert das Datenmodell und benachrichtigt alle anderen Komponenten. Sowohl Sprach- als auch Schrifterkenner liefern zusätzlich zum Erkennungsergebnis den Konfidenz-Score als Maß für die Sicherheit einer Hypothese des Erkenners. Der Konfidenzmanager dient dazu, den Dialogmanager vor unsicheren Hypothesen abzuschirmen. Zur Bestätigung unsicherer Hypothesen initiiert der Konfidenzmanager Confirmation-States über den Präsentationsmanager.

Der Dialogmanager bestimmt den nächsten Schritt in der Interaktion mit dem Nutzer auf Grundlage der eingehenden Events von den Modalitätskomponenten, dem Status der Datenobjekte im Datenmodell (filled/empty - jedem Changeable Objekt ist ein Slot im Datenmodell zugeordnet), dem Zustand der Eingabeobjekte auf dem Client (enabled/disabled) und dem Interaktionsmodus (GUI- oder VUI-zentrierte Interaktion). Der Dialogmanager sendet abstrakte Kommandos an den Präsentationsmanager. Die Befehle an den Präsentationsmanager umfassen die Präsentation oder die Aktualisierung eines Views auf dem Client, das Aktivieren oder Deaktivieren von Interaktoren oder die Abfrage von Eingabeelementen. Die Kommandos an den Präsentationsmanager sind abstrakt, d.h. unabhängig von Zielplattform und Modalität.

Der Präsentationsmanager empfängt die Events vom Dialog- und Konfidenzmanager und verteilt die Kommandos an die für das jeweilige Gerät und im jeweiligen Betriebszustand zur Verfügung stehenden Ausgabekanäle (Ausgabemodalitäten). Die zur Verfügung stehenden Ausgabemodalitäten entnimmt der Präsentationsmanager dem Datenmodell. Die Output Generation Komponenten (GUI Gen, VUI Gen etc.) erhalten abstrakte Kommandos vom Präsentationsmanager und transformieren diese in MMI Life Cycle Events (gemäß W3C Spezifikation) für die Kommunikation zwischen dem Interaktionsmanagement und den Modalitätskomponenten.

Das Datenmodell speichert den Zustand der Eingabeelemente auf dem Client (enabled/disabled), den Zustand der Datenobjekte (Slots für die Changeable Objekte, Datenobjekte als Ausgangsparameter der Server Operationen), die zur Verfügung stehenden Ein- und Ausgabemodalitäten und den eingestellten Interaktionsmodus (GUI- oder VUI-zentriert). Die Komponenten des Interaktionsmanagement interpretieren Dokumente im SCXML-Format (Standard des W3C).

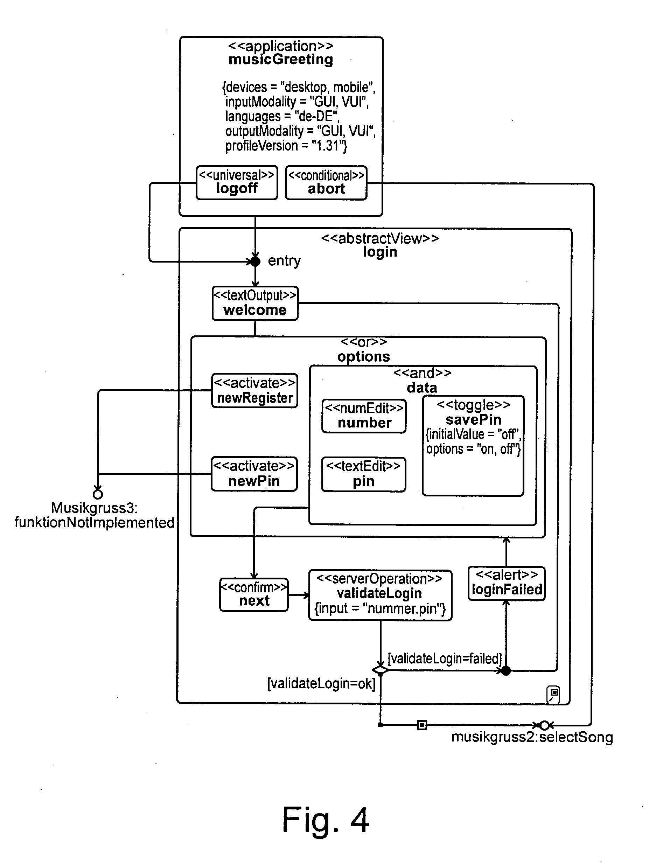

In Fig. 4, Fig. 5 und Fig. 6 sind drei Beispiele von Diagrammen von drei verschiedenen Teilen eines integrierten Modells einer beispielhaften Computer-Applikation, die hier als Musikgruß-Applikation bezeichnet wird, dargestellt. Dabei ist in Fig. 4 der Login-Teil des Modells der Musikgruß-Applikation gezeigt, in welchem die Authentifizierung eines Anrufers mittels ldentifikationsnummer und PIN abgebildet ist.

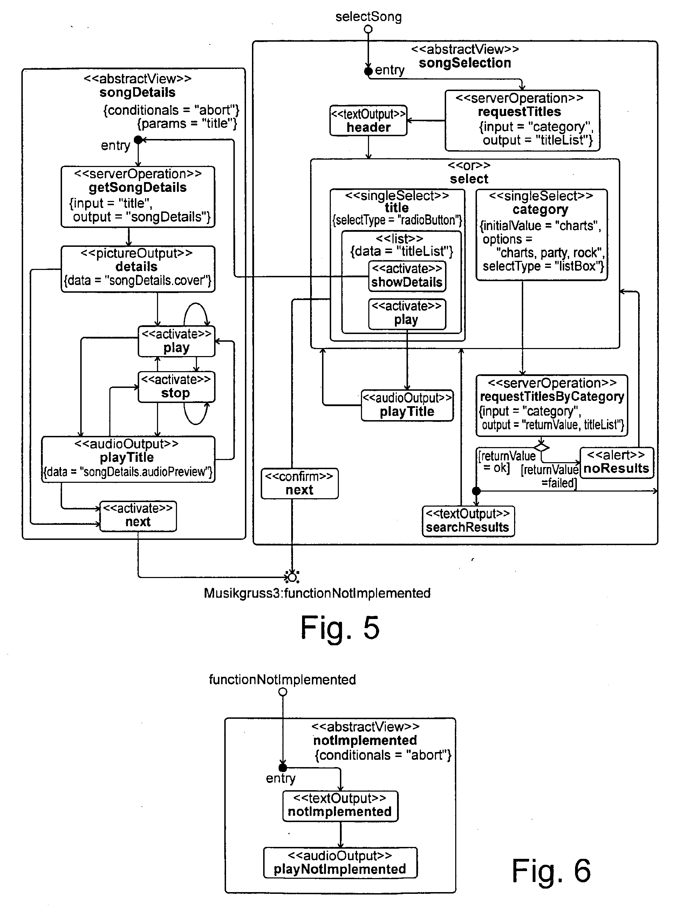

In Fig. 5 ist ein Diagramm mit zwei Views der Musikgruß-Applikation gezeigt, einem SongSelection-View und einem SongDetails-View. In der SongSelection kann der Nutzer sowohl zwischen unterschiedlichen Musiktiteln als auch zwischen unterschiedlichen Musikkategorien wählen. Die Auswahl einer neuen Musikkategorie zieht das Laden einer neuen Liste an Musiltiteln nach sich. In der SongDetails wird der ausgewählte Titel akustisch präsentiert und zusätzliche Informationen zum Titel ausgegeben. In Fig. 6 ist ein Notlmplemented-View gezeigt, der zur Behandlung noch nicht realisierter Links dient.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Alle Bezugszeichen in den Ansprüchen sind nicht als den Umfang der Ansprüche einschränkend zu verstehen.

## Patentansprüche

1. System zur automatisierten Generierung einer Computer-Applikation, das eine computerbetriebene Modellierungseinheit und einen computerbetriebenen Projektgenerator umfasst, wobei die Modellierungseinheit Erfassungsmittel zur grafischen Erfassung einer Komponente mittels einer vordefinierten Notation und Repräsentationsmittel zur Umwandlung der Komponente in eine Repräsentation aufweist und wobei der Projektgenerator Kompiliermittel zur Transformation der Repräsentation in die Computer-Applikation aufweist, **dadurch gekennzeichnet, dass** die Notation eine universelle Notation ist, so dass durch die Erfassungsmittel der Modellierungseinheit sowohl eine Interaktionskomponente als auch eine Logikkomponente mittels der Notation in einem integrierten Modell grafisch erfassbar sind.

2. System nach Anspruch 1, bei dem der Projektgenerator Datenmodellerzeugungsmittel umfasst, mit denen ein der Komponente entsprechendes Datenmodell bei der Transformation der Repräsentation in die Computer-Applikation erzeugbar ist.

3. System nach einem der Ansprüche 1 oder 2, bei dem die Notation so ausgestaltet ist, dass durch die Erfassungsmittel der Modellierungseinheit Interaktionskomponenten mehrerer Modalitäten mittels der Notation im integrierten Modell grafisch erfassbar sind.

4. System nach einem der vorangehenden Ansprüche, bei dem die Notation grafische Interaktionsobjekte, Relationen und Kontrollelemente umfasst, wobei die Interaktionsobjekte mittels der Relationen und Kontrollelemente gruppierbar und verbindbar sind.

5. System nach Anspruch 4, bei dem die Relationen der Notation logische Relationen und temporale Relationen umfassen.

6. System nach einem der Ansprüche 4 oder 5, bei dem die Notation Regeln und Bedingungen umfasst, wobei die Regeln und Bedingungen festlegen, in welcher Weise die Interaktionsobjekte mittels der Relationen und Kontrollelemente miteinander in Beziehung setzbar sind.

7. System nach Anspruch 6, das Validierungsmittel umfasst, die die Einhaltung der definierten Regeln und Bedingungen prüfen, mit denen Interaktionsobjekte mittels der Relationen und Kontrollelemente miteinander in Beziehung gesetzt sind.

8. System nach einem der Ansprüche 4 bis 7, bei dem die Interaktionsobjekte Ausgabeobjekte, Eingabeobjekte und Operationsobjekte aufweisen.

9. System nach einem der vorangehenden Ansprüche, bei dem die Modellierungseinheit Visualisierungsmittel zur gleichzeitigen kombinierten Darstellung der Interaktionskomponente und der Logikkomponente aufweist.

10. System nach Anspruch 9, bei dem die Visualisierungsmittel der Modellierungseinheit dazu ausgestaltet sind, zwei unterschiedliche Interaktionsmodi darzustellen.

11. Computerprogramm zum Betreiben des Systems nach einem der vorangehenden Ansprüche.
